# EUROPÄISCHE PATENTANMELDUNG

(11) **EP 2 005 811 A2**
(43) Veröffentlichungstag der Anmeldung: **24.12.2008**
(21) Anmeldenummer: 08009121.8
(22) Anmeldetag: 16.05.2008
(51) Int. Cl.: A01C 7/20

(54) **Sämaschine**

(30) Priorität: 20.06.2007 DE 102007028193
(71) Anmelder: Amazonen-Werke H. Dreyer GmbH & Co. KG, 49205 Hasbergen-Gaste (DE)
(72) Erfinder: Olderog-Enge, Arndt, 23769 Dänschendorf a/F. (DE)

(57) **Zusammenfassung**

Sämaschine mit einem zumindest einen als Querbalken ausgebildeten Scharbalken aufweisenden Rahmen, wobei an dem Querbalken die Säschare in aufrechter Ebene mittels einer Gelenkanordnung bewegbar angeordnet sind, wobei den Säscharen gegenüber den Furchenöffnungselementen der Säschare in Höhenrichtung mittels Verstellelementen verstellbare Tiefenführungselemente zugeführt sind. Um ist vorgesehen, dass die Verstellelemente zur Verstellung der Tiefenführungselemente an einer zentralen Verstelleinrichtung angeordnet sind.

## Beschreibung

Die Erfindung betrifft eine Sämaschine gemäß des Oberbegriffes des Patentanspruches 1.

Eine derartige Sämaschine ist beispielsweise durch die DE 10 2004 043 565 A1 bekannt. Bei dieser Sämaschine ist für jedes Verstellelement zur Verstellung der Tiefenführungselemente eine eigene Verstelleinrichtung vorgesehen. Diese Verstelleinrichtung ist zwischen dem Verstellelement der als Rollen ausgebildeten Tiefenführungselemente und dem Scharkörper angeordnet und als Einstellschraube ausgebildet. Jede Einstellschrauben der Schare müssen jeweils einzeln mittels eines Schlüssels oder einer Kurbel eingestellt werden. Somit muss zur Einstellung der Tiefenführungselemente die Verstelleinrichtung jedes Verstellelementes für jedes Säschar also separat eingestellt werden.

Der Erfindung liegt die Aufgabe zugrunde, die Tiefeneinstellung für die Tiefenführungselemente gegenüber den Säscharen zu vereinfachen und zu rationalisieren.

Diese Aufgabe wird erfindungsgemäß durch das kennzeichnende Merkmal des Patentanspruches 1 gelöst.

Infolge dieser Maßnahme können über die zentrale Stelleinrichtung die Verstellelemente zur Verstellung der Tiefenführungselemente gleichzeitig in einem Einstellvorgang verstellt werden, so dass sämtliche Tiefenführungselemente für die Säschare, die der zentralen Verstelleinrichtung zugeordnet sind, eingestellt werden. Selbstverständlich ist es möglich, eine gruppenweise zentrale Verstelleinrichtung vorzusehen, so dass je Scharbalkenabschnitt beispielsweise die Tiefenführungselemente der Säschare einstellbar sind. Somit wird eine wesentlich schnellere Einstellung der Tiefenführungselemente erreicht. Mit einer motorischen Ausgestaltung der Verstelleinrichtung ist auch eine Verstellung während der Ausbringarbeit zur Anpassung an die Einsaatbedingungen möglich.

Um eine einfache Verstelleinrichtung zu verwirklichen, ist vorgesehen, dass die zentrale Verstelleinrichtung als sich quer zur Fahrtrichtung erstreckende und verdrehbar gelagerter Balken ausgebildet ist.

In einfacher Weise lässt sich die Verstelleinrichtung dadurch verwirklichen, dass der Balken der Scharbalken selbst ist.

Um in einfacher Weise an einem um seine Längsachse verdrehbaren Scharbalken die Säschare in einfacher Weise befestigen zu können, ist vorgesehen, dass die Gelenkanordnung der Schare der Scharbalken als Drehlager umgreifet.

Um in einfacher Weise die Einstellbewegung durch Verdrehen des Balkens auf die Verstellelemente der Tiefenführungselemente übertragen zu können, ist vorgesehen, dass an dem Balken Hebel angeordnet sind, dass die Tiefenführungselemente mittels Kipphebel an den Scharkörper der Säschare angeordnet sind, dass zwischen den Hebeln und den Kipphebeln jeweils Verbindungsstangen angeordnet sind.

Eine vorteilhafte Ausgestaltung der Gelenkanordnung und der zentralen Verstelleinrichtung wird dadurch erreicht, dass die Schwenkachse der Gelenkanordnung der Säschare der Längesachse und der Drehachse des Scharbalkens zusammenfällt.

Eine vorteilhafte Parallelogrammanlenkung der Schare an dem Rahmen lässt sich dadurch erreichen, dass die Gelenkanordnung zur Scharanordnung am Rahmen zusätzlich zu dem Scharbalken angelenkten Schararm einen an einen weitern quer zur Fahrtrichtung verlaufenden Querträger angeordneten Scharlenker aufweist, dass an diesem Querträger jeweils mittels Gummilagerung mit dem Scharträger der Säschare verbundener Scharlenker angelenkt ist.

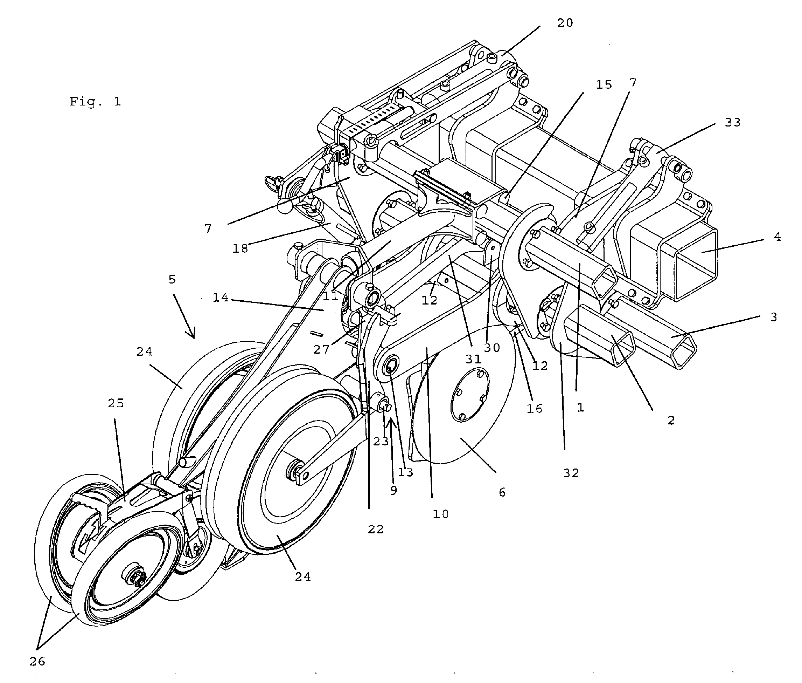

Weitere Einzelheiten der Erfindung sind der Beispielsbeschreibung und den Zeichnungen zu entnehmen. Hierbei zeigen
- Fig. 1: die Schare einer Scharreihe, die an einem Querbalken angeordnet sind, einer Sämaschine in perspektivischer Darstellung mit Einstellung der größtmöglichen Eindringtiefe der Scharscheiben in den Boden,

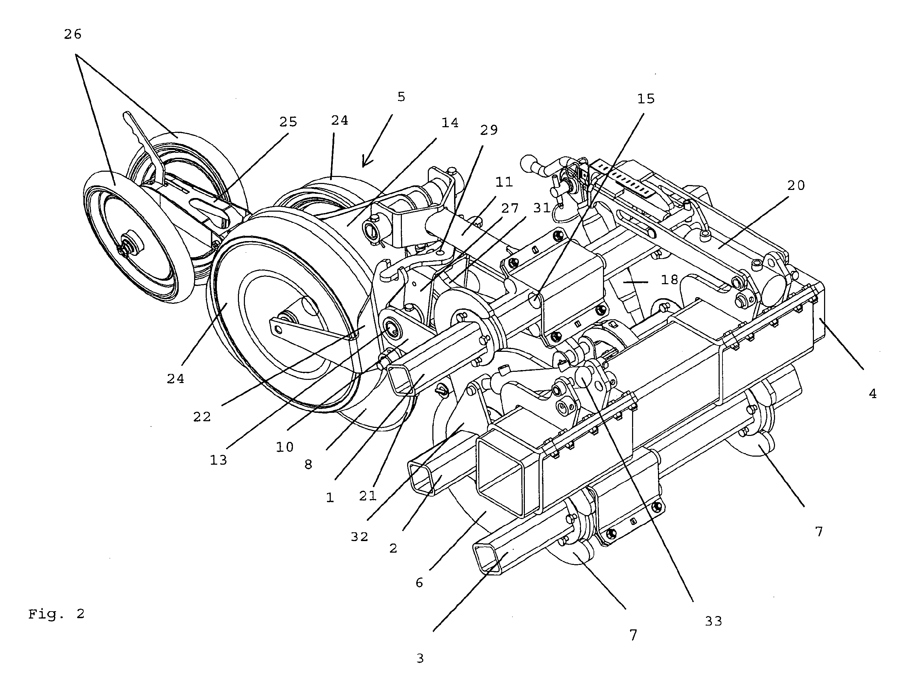

- Fig. 2: die Schare gemäß Fig. 1 in einer anderen perspektivischen Darstellung,

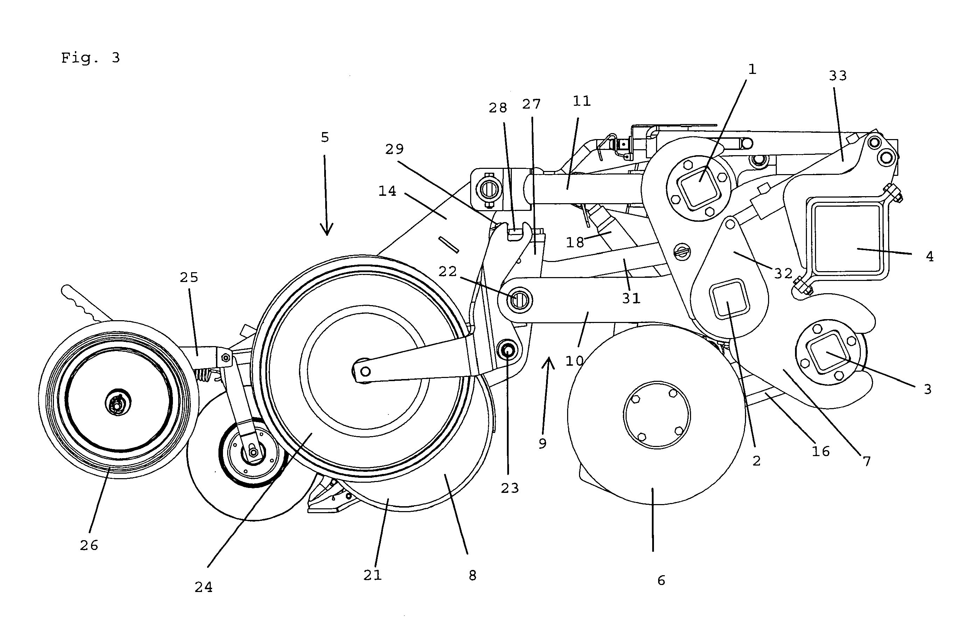

- Fig. 3: die Einstellung der Tiefenführungsrollen der Schare gemäß Fig. 1 in Seitenansicht,

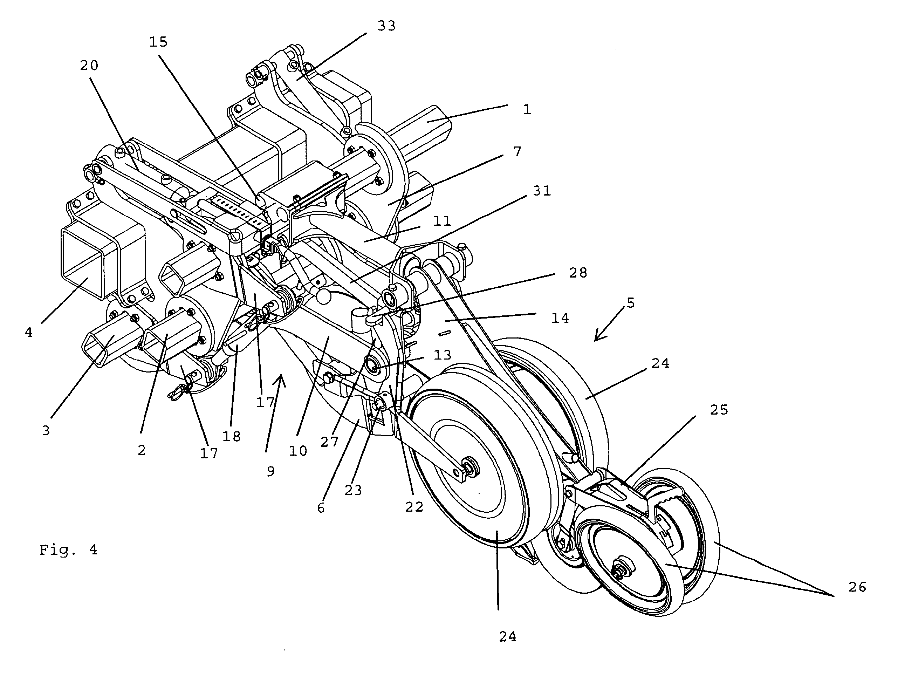

- Fig. 4: die Säschare gemäß der Einstellung nach Fig. 1 in einer anderen perspektivischen Darstellung,

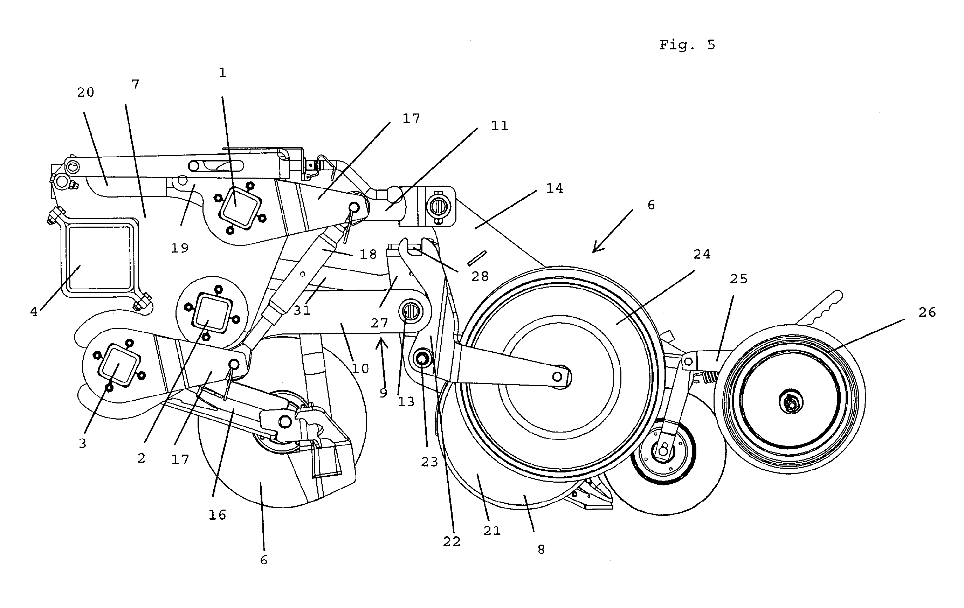

- Fig. 5: die Einstellung der Tiefenführungsrollen der Säschare gemäß Fig. 1 in Seitenansicht, von der anderen Seite als in Fig. 3,

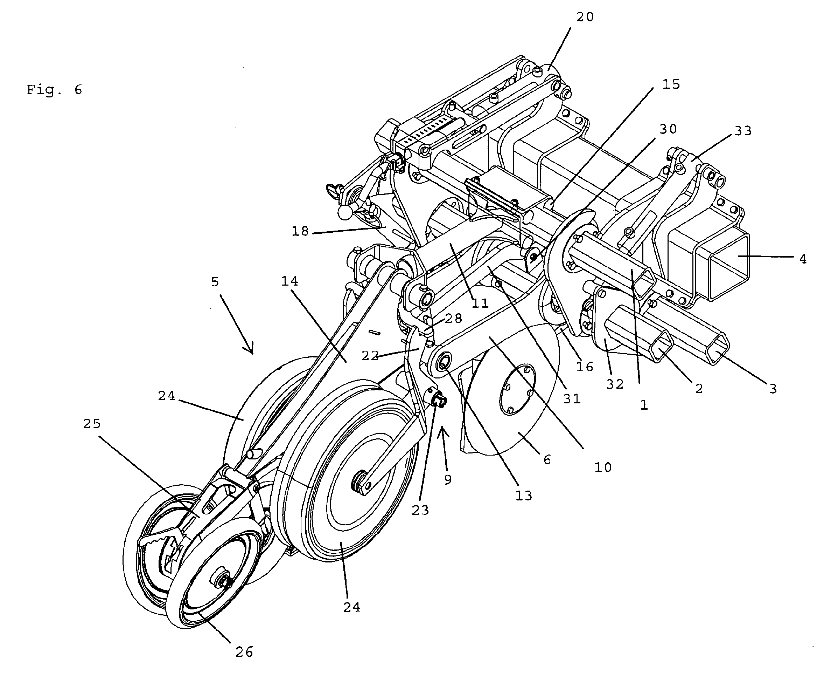

- Fig. 6: eine andere Einstellung der Tiefenführungsrolle zu den Scharen in perspektivischer Darstellung und

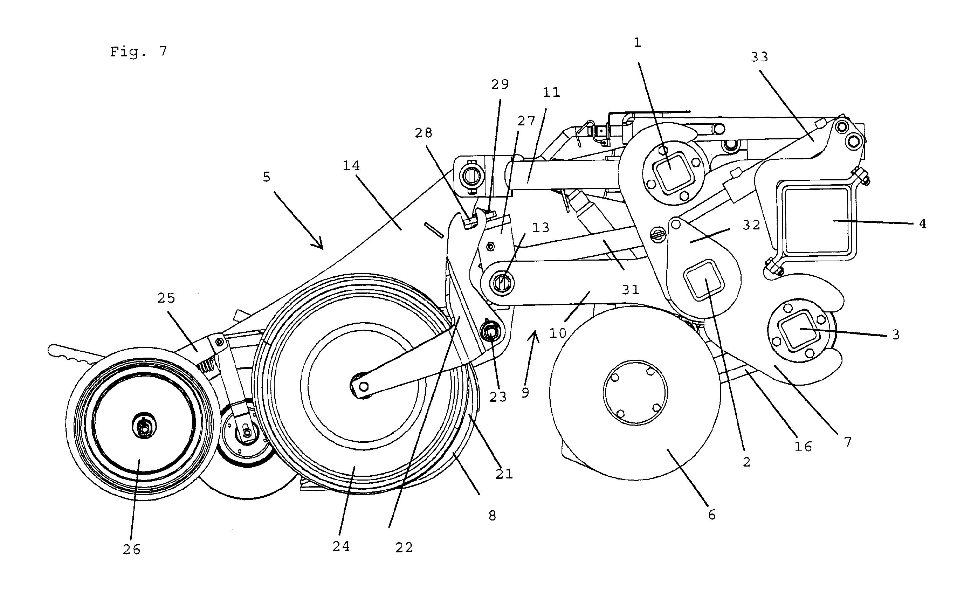

- Fig. 7: die Einstellung der Tiefenführungsrollen der Schare gemäß Fig. 6 in Seitenansicht.

Die Sämaschine weist einen nicht dargestellten Rahmen auf, der an einen Ackerschlepper ankuppelbar ist, um die Sämaschine über das zu bestellende Feld zu bewegen. Auf dem Rahmen in nicht dargestellter Weise sind Vorratsbehälter angeordnet, von denen aus über Dosier - und Förderorgane das sich in den Vorratsbehältern befindliche Material den an quer zur Fahrtrichtung verlaufenden Scharbalken 1 und 2 sowie Tragbalken 3, die an dem Rahmen über den Querbalken 4 angeordnet sind, angeordneten Säscharen 5 und Düngerscharen 6 zu führen.

An dem Querbalken 4 sind mittels der Halterungselemente 7 die Scharbalken 1 und 2 sowie der Tragbalken 3 befestigt. Die Furchenöffnungselemente 8 aufweisenden Säschare 5 sind mittels einer Gelenkanordnung 9 der Scharhalterung in aufrechter Ebene bewegbar angeordnet. Die die Scharhalterung aufweisenden Gelenkanordnungen 9 weisen jeweils die beiden zumindest annähernd parallel zueinander verlaufenden Schararme 10 und Scharlenker 11 auf, die an den übereinander angeordneten Scharbalken 1 und 2 angelenkt sind.

An dem unteren Scharbalken 2 ist der Schararm 10 jeweils mittels eines Gelenkes 12, das eine den Scharbalken 2 umgreifende Drehlagerung aufweist, in aufrechter Ebene bewegbar angeordnet. Das hintere Ende des Schararmes 10 ist mittels eines Gelenkes 13 an den Scharkörper 14 des Säschares 5 angeordnet. Der untere Schararm 10 weist zwei beabstandet zueinander angeordnete Trägerelemente auf, die jeweils mit einer den Scharbalken umgreifenden Drehlagerung 12 am Scharbalken 2 angeordnet sind. An dem oberen als Querträger ausgebildeten Scharbalken 1 ist der Scharlenker 11 mittels einer Gummilagerung 15 angelenkt. Über diese Gummilagerung 15 ist durch verdrehen des oberen Scharbalkens 1 Schardruck auf die Säschare 5 in Richtung des Bodens aufzubringen oder durch entgegengesetzten Verdrehen des Scharbalkens sind die Säschare 5 aus dem Boden zu heben und nach oben anzuheben.

An den quer zur Fahrtrichtung verlaufenden Scharbalken 1, 2 sind mehrere Säschare 5 beabstandet zueinander angeordnet.

An dem Tragbalken 3 sind mittels einer Gummilagerung die Scharhaltearme 16 der Düngerschare 6 angelenkt.

An dem oberen Scharbalken 1 und den Tragbalken 3 sind Schwenkhebel 17 drehfest angeordnet, deren oberen freien Enden mittels einer als Stellscheibe 18 ausgebildete Verbindungselement verbunden sind. Weiterhin ist an den oberen Scharbalken 1 ein Einstellhebel 19 drehfest angeordnet. Zwischen den freien Enden des Einstellhebels 19 und dem Querbalken 4 ist das als doppeltwirkender Hydraulikzylinder 20 ausgebildete motorische Stellelement angeordnet, mittels welchen der Scharbalken 1 und der Tragbalken um ihre Längsachse verdrehbar sind.

Die Furchenöffnungselemente 8 der Säschare 5 sind im Ausführungsbeispiel als Doppelscheibenschare 21 ausgebildet und mittels eines Drehlagers an den Scharkörper 14 frei drehbar angeordnet. Die Doppelscheibenschare 21 bilden die Furchenöffnungselemente. Mittels der Scheiben 21 wird eine Säfurche in den Boden gezogen, in welche das auszubringende Material, beispielsweise Saatgut, abgelegt wird.

An dem Scharkörper 14 sind mittels Kipphebel 22 über das Gelenk 23 die als Tiefenführungsrollen 24 ausgebildeten Tiefenführungselemente gelagert. Über die Kipphebel 22 sind die Tiefenführungsrollen 24 gegenüber den Doppelscheibenscharen 21 in der Höhe verstellbar, so dass über die Tiefenführungsrollen 24 die Eindringtiefe der Doppelscheibenschare 21 in den Boden und somit die Sätiefe einzustellen ist. Hinter den Doppelscheibenscharen 21 sind an dem Scharkörper 14 über eine Hebelanordnung 25 die die Saatfurche schließenden und den Boden andrückenden Saatandruckrollen 26 angeordnet.

An dem Scharkörper 14 ist der U-förmige Verstellhebel 27 zum Verstellen der Kipphebel 22 angeordnet. Um die jeweils den seitlich der Doppelscheibenscharen 21 angeordneten Tiefenführungsrollen 24 zugeordneten Kipphebel 22 gemeinsam verstellen zu können, ist zwischen dem Verstellhebel 27 und dem oberen Enden der Kipphebel 22 der Ausgleichshebel 28 mittels eines Gelenkes 29 angeordnet.

An dem Scharbalken 2 sind jeweils zwischen den den Scharbalken 2 umgreifenden Drehlager 10 Hebel 30 drehfest angeordnet. Die freien Enden der Hebel sind jeweils mit den Verstellhebeln 27 über Verbindungsstangen 31 miteinander verbunden.

An dem unteren Scharbalken 2 ist ein Einstellhebel 32 drehfest angeordnet. Zwischen dem freien Ende des Einstellhebels 32 und dem Querbalken 4 ist ein als doppeltwirkender Hydraulikzylinder 33 ausgebildetes motorisches Stellelement angeordnet.

Die Schwenkachse der Gelenkanordnung 12 der Schararme 10 fällt mit der Längsachse und der Drehachse des Scharbalkens 2 zusammen. Der Scharbalken 2 ist um seine Längsachse mittels des zwischen einem an dem Scharbalken 2 angeordneten Schwenkhebel 32 und dem Rahmen angeordneten, als doppeltwirkenden Hydraulikzylinder 33 ausgebildeten motorischen Einstellelement um seine Längsachse verschwenkbar. Durch das Verschwenken des Scharbalkens 2 mittels des Hydraulikzylinders 33 um seine Längsachse wird über die Verbindungsstange 31 der Einstellhebel 27 und somit die Kipphebel 23 verschwenkt. Durch dieses Verschwenken können sämtliche, die mit dem Scharbalken 2 über die Verbindungsstangen 31 in Wirkverbindung stehenden Tiefenführungsrollen 24 der Säschare 5 verstellt werden. Hierdurch wird eine zentrale Verstellung der Tiefenführungsrollen 24 gegenüber den als Doppelscheibenscharen 21 ausgebildeten Furchenöffnungselementen 8 erreicht. Somit ist also eine zentrale Tiefeneinstellung in einfacher Weise möglich.

## Patentansprüche

1. Sämaschine mit einem zumindest einen als Querbalken ausgebildeten Scharbalken aufweisenden Rahmen, wobei an dem Querbalken die Säschare in aufrechter Ebene mittels einer Gelenkanordnung bewegbar angeordnet sind, wobei den Säscharen gegenüber den Furchenöffnungselementen der Säschare in Höhenrichtung mittels Verstellelementen verstellbare Tiefenführungselemente zugeführt sind, **dadurch gekennzeichnet, dass** die Verstellelemente (27, 28, 31) zur Verstellung der Tiefenführungselemente (24) an einer zentralen Verstelleinrichtung (2, 32, 33) angeordnet sind.

2. Sämaschine nach Anspruch 1, **dadurch gekennzeichnet, dass** die zentrale Verstelleinrichtung als sich quer zur Fahrtrichtung erstreckende und verdrehbar gelagerter Balken (2) ausgebildet ist.

3. Sämaschine nach einem oder mehreren der vorstehenden Ansprüche, **dadurch gekennzeichnet, dass** der Balken der Scharbalken (2) ist.

4. Sämaschine nach Anspruch 3, **dadurch gekennzeichnet, dass** die Gelenkanordnung (9) der Schare (5) der Scharbalken (2) als Drehlager (12) umgreifet.

5. Sämaschine noch einem oder mehreren der vorstehenden Ansprüche, **dadurch gekennzeichnet, dass** an dem Balken (2) Hebel (30) angeordnet sind, dass die Tiefenführungselemente (24) mittels Kipphebel (22) an den Scharkörper (14) der Säschare (5) angeordnet sind, dass zwischen den Hebeln (30) und den Kipphebeln (22) jeweils Verbindungsstangen (31) angeordnet sind.

6. Sämaschine nach einem oder mehreren der vorstehenden Ansprüche, **dadurch gekennzeichnet, dass** die Schwenkachse der Gelenkanordnung (9) der Säschare (5) der Längesachse und der Drehachse des Scharbalkens (2) zusammenfällt.

7. Sämaschine nach einem oder mehreren der vorstehenden Ansprüche, **dadurch gekennzeichnet, dass** die Gelenkanordnung (9) zur Scharanordnung am Rahmen zusätzlich zu dem Scharbalken (2) angelenkten Schararm (10) einen an einen weiteren quer zur Fahrtrichtung verlaufenden Querträger (1) angeordneten Scharlenker (11) aufweist, dass an diesem Querträger (1) jeweils mittels Gummilagerung (16) mit dem Scharträger (1) der Säschare (5) verbundener Scharlenker (11) angelenkt ist.

8. Sämaschine nach einem oder mehreren der vorstehenden Ansprüche, **dadurch gekennzeichnet, dass** die Tiefenführungselemente als Tiefenführungsrollen (24) ausgebildet sind.

9. Sämaschine nach einem oder mehreren der vorstehenden Ansprüche, **dadurch gekennzeichnet, dass** die Furchen Öffnungselemente (8) als Scheiben- oder Doppelscheibenschar (21)ausgebildet sind.
